# FASCICULE DE BREVET EUROPEEN

(11) **EP 2 577 068 B1**
(45) Date de publication et mention de la délivrance du brevet: **07.02.2018**
(21) Numéro de dépôt: 11727269.0
(22) Date de dépôt: 25.05.2011
(51) Int. Cl.: F04D 29/54

(54) **GÉNÉRATEURS DE TOURBILLONS EN AMONT D'UNE GRILLE D'AUBES DE COMPRESSEUR**
WIRBELGENERATOREN STROMAUF EINER VERDICHTER-SCHAUFELREIHE
VORTEX GENERATORS UPSTREAM OF A COMPRESSOR BLADE ROW

(30) Priorité: 26.05.2010 FR 1002215
(43) Date de publication de la demande: 10.04.2013
(73) Titulaire: Safran Aircraft Engines, 75015 Paris (FR)
(72) Inventeur: DOMERCQ, Olivier, Stéphane, F-77170 Brie Comte Robert (FR); PERROT, Vincent, Paul, Gabriel, F-94700 Maisons Alfort (FR); PESTEIL, Agnès, F-94140 Alfortville (FR)
(74) Mandataire: Gevers & Orès
(86) Numéro de dépôt international: PCT/FR2011/051191
(87) Numéro de publication internationale: WO 2011/148101

(56) Documents cités:
- WO-A1-2008/046389
- US-A- 5 211 533
- US-A- 6 146 099
- US-A1- 2004 265 118
- US-A1- 2009 317 232

## Description

La présente invention concerne le domaine des ensembles à aubes de compresseur de turbomachine, telle qu'un turboréacteur ou un turbomoteur d'hélicoptère. L'invention concerne également un compresseur comprenant un tel ensemble à aubes, en particulier un redresseur de compresseur haute pression.

On sait que le système de compression d'un turboréacteur (et le compresseur haute pression en particulier) est l'un des composants les plus critiques du moteur. Le compresseur d'un turboréacteur est composé de plusieurs étages successifs de compression, chaque étage comportant deux ensembles à aubes, à savoir un rotor et un redresseur (stator). Le redresseur comporte, de façon usuelle, une virole interne et une virole externe qui sont coaxiales, ainsi que des aubes qui sont agencées côte à côte entre ces viroles interne et externe et qui sont raccordées à ces dernières par leurs extrémités, comme décrit par exemple dans le document FR-2 896 019.

Pour assurer le fonctionnement d'un compresseur, il existe un jeu, à chaque étage, entre le redresseur et le moyeu, formant une cavité sous redresseur. Généralement, un débit de fuite circule dans cette cavité, de l'aval du redresseur vers l'amont, en passant sous l'extrémité radialement interne de la virole interne. Ce débit de fuite est ensuite réinjecté dans la veine d'air, en amont du redresseur.

Ce débit de fuite perturbe l'écoulement principal et participe à la génération de décollements. En particulier, il modifie les conditions d'écoulement en amont des aubes, il favorise l'apparition d'un décollement de coin, et il amplifie les pertes associées.

Ainsi, deux principales sources de pertes coexistent dans cette région du compresseur : celles dues à la recirculation sous le stator, et celles induites par le décollement de coin.

Aussi, pour diminuer efficacement les pertes, il convient d'agir sur ces deux phénomènes à la fois.

Pour réduire des décollements, on connaît, par le document WO-2008/046389, un système qui utilise des générateurs de vortex disposés au moyeu, en amont des roues fixes ou mobiles d'un compresseur. Ces générateurs de vortex qui sont prévus sur la paroi de conduit interne et/ou externe en amont, génèrent des turbulences de sillage qui augmentent l'énergie de la couche limite sur la paroi de canal. Il résulte une augmentation de la composante de l'écoulement dans le sens de l'écoulement principal, à proximité de la paroi, qui agit favorablement sur le décollement au niveau des aubes fixes et mobiles.

Le système décrit dans ce document WO-2008/046389 qui agit uniquement sur l'écoulement principal ne couvre que l'un des deux problèmes de décollement précités, alors que ces deux problèmes sont liés. Cette solution usuelle n'est donc pas complètement satisfaisante pour réduire les pertes au niveau du redresseur.

La Demanderesse s'est fixé comme objectif de prévoir un ensemble à aubes qui permet de limiter, voire d'annuler, simultanément les deux types de pertes précitées.

Conformément à l'invention, un ensemble à aubes pour un compresseur de turbomachine, comportant une pluralité de dispositifs individuels agissant sur l'écoulement, qui sont formés de manière à au moins générer des tourbillons, est caractérisé par le fait que chacun desdits dispositifs individuels est prévu en amont dudit ensemble de manière à agir simultanément sur l'écoulement principal et sur un écoulement de recirculation.

La solution proposée par la présente invention consiste donc à prévoir des dispositifs générateurs de tourbillons qui exercent des actions simultanément sur l'écoulement principal et sur l'écoulement de recirculation, et agissent ainsi simultanément sur les deux sources de pertes précitées, ce qui permet de réduire efficacement les pertes.

En effet, lorsque l'écoulement principal dans la veine et le débit de recirculation sortant de la cavité rencontrent ces dispositifs conformes à l'invention, il se crée des tourbillons. Ces tourbillons permettent un transfert d'énergie de l'écoulement principal vers les couches limites. Les couches limites sont alors accélérées. Comme les faibles vitesses en pied du stator, côté extrados, dans le cas d'un redresseur, sont responsables du tourbillon de coin, ledit tourbillon de coin est ainsi réduit.

Un avantage de la solution conforme à la présente invention et de ses variantes est de limiter au maximum l'impact sur la longueur axiale du compresseur.

Dans un mode de réalisation particulier, au moins certains (et de préférence l'ensemble) desdits dispositifs individuels générateurs de tourbillons comportent des échancrures qui sont pratiquées directement dans la face amont d'une virole qui est contournée par ledit écoulement de recirculation.

Dans le cadre de la présente invention :
- les notions de amont et aval sont définies par rapport au sens de l'écoulement principal de l'air dans l'ensemble à aubes et le compresseur ; et
- le terme radial est relatif à l'axe du compresseur.

Dans un mode de réalisation préféré, lesdits dispositifs individuels générateurs de tourbillons sont formés de manière à également guider au moins ledit écoulement de recirculation. A cet effet, au moins certains desdits dispositifs comportent, de préférence, des ailettes qui sont agencées au niveau de la face amont d'une virole qui est contournée par ledit écoulement de recirculation.

Ce mode de réalisation préféré prévoit donc sur ladite virole, à la sortie de la cavité, des dispositifs qui à la fois guident le fluide en sortie de cavité et génèrent des tourbillons permettant de contrôler le décollement (au pied ou à la tête) de l'ensemble à aubes.

En outre, de façon avantageuse, certains desdits dispositifs peuvent être agencés :
- soit, entre deux aubes successives. Dans ce cas, une position préférentielle est située à un tiers du canal inter-aubes, côté extrados vue de l'amont ;
- soit, à chaque fois directement en amont d'une aube.

De plus, lesdits dispositifs peuvent être prévus sur la totalité ou seulement sur une partie de la circonférence de l'ensemble à aubes.

Dans un premier mode de réalisation préféré, ledit ensemble à aubes correspond à un redresseur pour un compresseur de turbomachine, ledit redresseur comportant une virole externe et une virole interne qui sont coaxiales, ainsi que des aubes qui sont agencées côte à côte entre ces viroles externe et interne et qui sont raccordées à ces dernières par leurs extrémités, ledit redresseur comportant également une pluralité de dispositifs individuels agissant sur l'écoulement qui sont prévus sur la virole interne, chacun desdits dispositifs étant prévu au niveau de la face amont de la virole interne, à proximité du côté radialement externe, de manière à agir simultanément sur l'écoulement principal et sur l'écoulement de recirculation qui correspond à l'écoulement du fluide passant sous le côté radialement interne de la virole interne, en provenance de la face aval.

En outre, dans un second mode de réalisation, ledit ensemble à aubes correspond à un rotor pour un compresseur de turbomachine, ledit rotor comportant une virole interne et une virole externe qui sont coaxiales, ainsi que des aubes qui sont agencées côte à côte entre ces viroles interne et externe et qui sont raccordées à ces dernières par leurs extrémités, ledit rotor comportant également une pluralité de dispositifs individuels agissant sur l'écoulement qui sont prévus sur la virole externe, chacun desdits dispositifs étant prévu au niveau de la face amont de la virole externe de manière à agir simultanément sur l'écoulement principal et sur l'écoulement de recirculation qui correspond à l'écoulement du fluide passant sur le côté radialement externe de la virole externe, en provenance de la face aval.

Quel que soit le mode de réalisation, la réduction des décollements, obtenue grâce à l'invention, permet d'améliorer le rendement du compresseur et contribue à accroître la plage de stabilité.

En outre, un seul type de dispositif permet de contrôler l'écoulement dans les cavités et diminuer les décollements associés. De plus, ces dispositifs sont fixés ou fabriqués directement dans la plate-forme (virole) du redresseur ou du rotor, ce qui limite les difficultés d'intégration ou de fabrication.

Par ailleurs, la présente invention concerne également un compresseur de turbomachine qui comprend au moins un ensemble à aubes (redresseur, rotor) tel que précité et/ou une turbomachine, en particulier un turboréacteur d'aéronef, qui comporte un tel compresseur.

D'autres caractéristiques et avantages apparaîtront à la lecture de la description qui suit, accompagnée des dessins en annexe sur lesquels :
- la figure 1 représente de façon schématique une aube d'un redresseur de compresseur ;
- la figure 2 est une représentation montrant un décollement apparaissant au niveau d'une aube telle que celle représentée sur la figure 1 ;
- la figure 3 représente une vue partielle en perspective d'un redresseur de compresseur haute pression de turbomachine comprenant des dispositifs agissant sur l'écoulement, conformes à un premier mode de réalisation de l'invention ;
- la figure 4 est une représentation semblable à celle de la figure 2, mettant en évidence les avantages obtenus par le mode de réalisation de la figure 3 ;
- la figure 5 représente une vue partielle en perspective d'un redresseur de compresseur haute pression de turbomachine comprenant des dispositifs agissant sur l'écoulement, conformes à un second mode de réalisation préféré de l'invention ;
- la figure 6 est une représentation semblable à celle de la figure 2, mettant en évidence les avantages obtenus par le mode de réalisation de la figure 5 ;
- la figure 7 est une vue partielle en perspective d'un redresseur de compresseur haute pression de turbomachine comprenant des dispositifs agissant sur l'écoulement, cet exemple ne faisant cependant pas partie de l'invention ; et
- la figure 8 est une représentation schématique d'un rotor de compresseur haute pression de turbomachine, auquel peut être appliquée la présente invention.

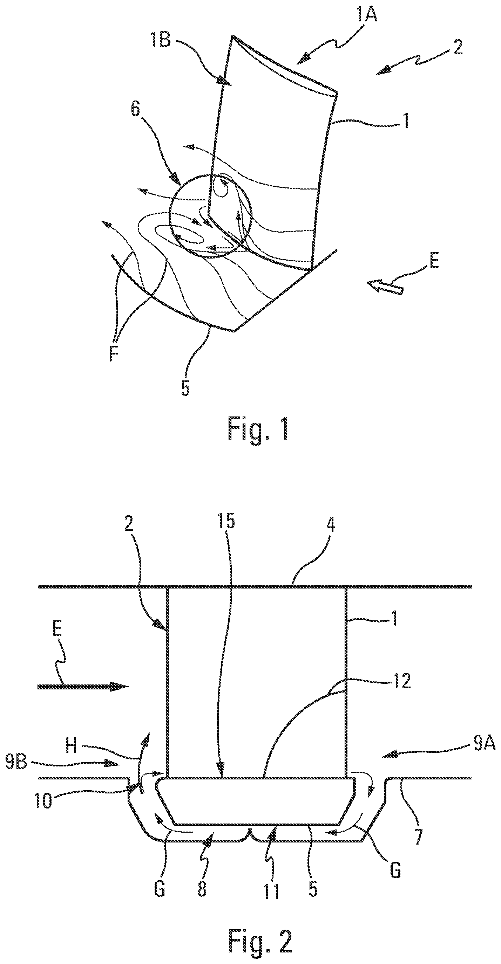

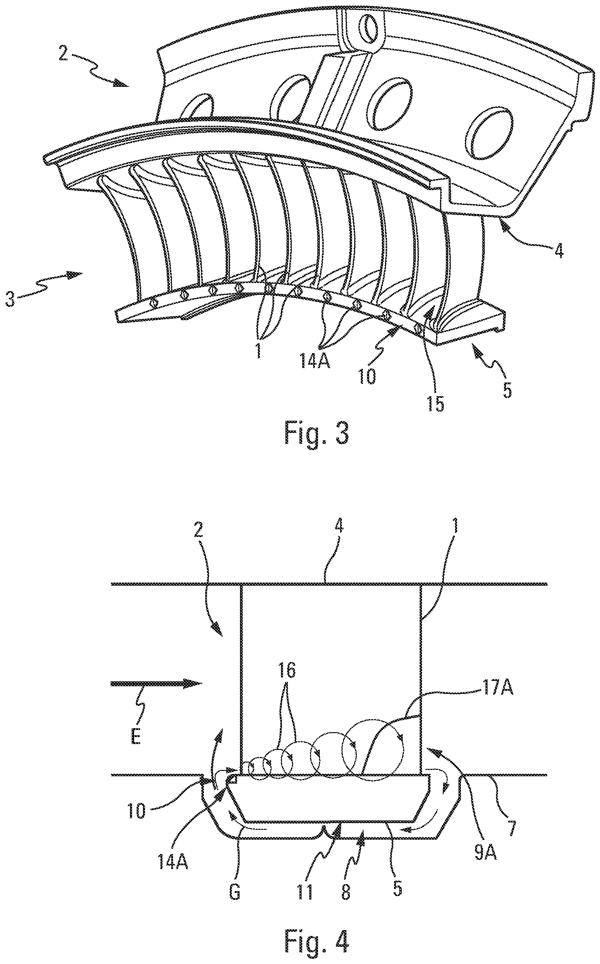

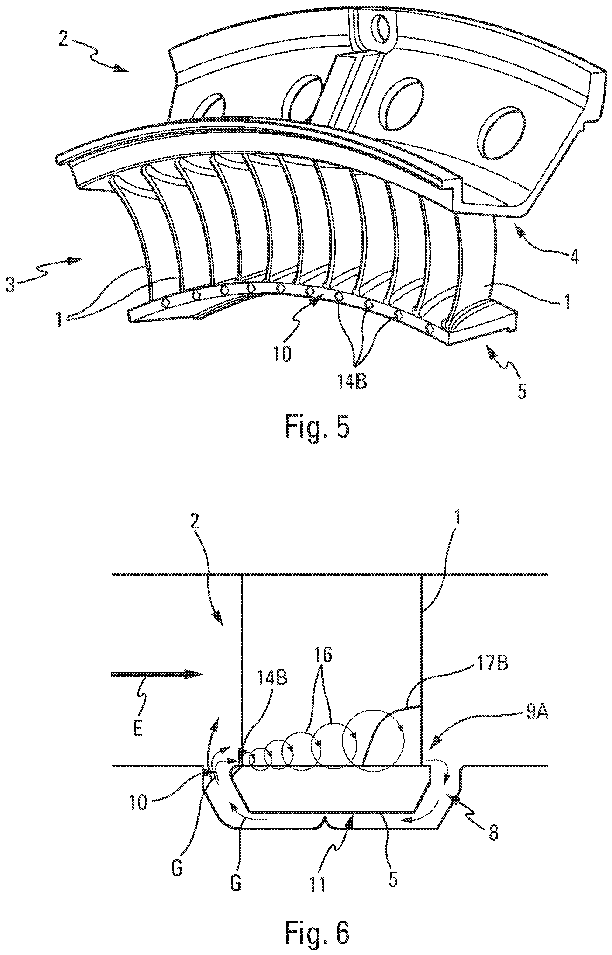

Sur la figure 1, on a représenté une aube 1 d'un redresseur 2 tel que celui montré partiellement sur les figures 3 et 5. Ce redresseur 2 fait partie d'un compresseur 3 de turbomachine, en particulier d'un turboréacteur d'aéronef. Un compresseur 3 comporte, de façon usuelle, plusieurs étages successifs de compression, chaque étage étant composé d'un rotor 22 et d'un redresseur 2 (stator).

Ce redresseur 2 comporte une virole (radialement) externe 4 et une virole (radialement) interne 5 qui sont des viroles de support d'aubes 1. Ces deux viroles 4 et 5 sont concentriques, et une pluralité d'aubes 1 s'étendent sensiblement radialement de l'une vers l'autre de ces viroles 4 et 5 auxquelles elles sont solidarisées, ces aubes 1 étant espacées circonférentiellement, préférentiellement de façon uniforme.

Dans le cadre de la présente invention :
- les notions de amont et aval sont définies par rapport au sens de l'écoulement principal de l'air dans le redresseur 2 et le compresseur 3 ; et
- le terme radial est relatif à l'axe du compresseur 3.

Sur la figure 1, on a représenté par l'intermédiaire d'une flèche E le sens de l'écoulement principal de fluide et par l'intermédiaire de flèches F en traits fins des circulations locales de fluide existant au pied de l'aube 1 (d'intrados 1A et d'extrados 1B). Au pied de l'aube 1, à son extrados 1B apparaît une zone 6 de décollement de coin.

Pour assurer le fonctionnement d'un compresseur 3, il existe un jeu, à chaque étage, entre le redresseur 2 et le moyeu 7, ce jeu créant une cavité 8 dite cavité sous redresseur, comme représenté sur la figure 2. Généralement, un débit de fuite (illustré par des flèches G) circule dans cette cavité 8, de la face aval 9A du redresseur 2 vers la face amont 9B, en passant sous le côté 11 radialement interne de la virole interne 5. Ce débit de fuite est ensuite réinjecté dans la veine d'air, en amont du redresseur 2, comme montré notamment par une flèche H. Ce débit de fuite perturbe l'écoulement principal (illustré par la flèche E) et participe à la génération de décollements, mis en évidence schématiquement par un trait 12 sur la figure 2. En particulier, le débit de fuite modifie les conditions d'écoulement en amont des aubes 1, favorise l'apparition d'un décollement de coin, et amplifie les pertes associées. Ainsi, deux sources de pertes coexistent dans cette région du compresseur 2 : celles dues à la recirculation dans la cavité sous redresseur 8, et celles induites par le décollement de coin 6.

La présente invention propose une solution permettant d'agir simultanément sur ces deux phénomènes pour diminuer efficacement les pertes associées.

Pour ce faire, le redresseur 2 comporte une pluralité de dispositifs individuels 14A, 14B qui agissent sur l'écoulement. Chacun desdits dispositifs 14A, 14B est prévu au niveau de la face amont 10 de la virole interne 5, à proximité du côté radialement externe 15, entre deux aubes 1 successives, comme représenté sur les figures 3 et 5, de manière à agir, au niveau de la face amont 10, simultanément sur l'écoulement principal E et sur l'écoulement de recirculation G (qui correspond à l'écoulement du fluide passant par la cavité 8 sous le côté radialement interne 11 de la virole interne 5 en provenance de la face aval 9A), comme illustré sur les figures 4 et 6 .

Ces dispositifs 14A, 14B sont formés de manière à au moins générer des tourbillons 16 qui permettent de réduire le décollement, comme illustré schématiquement par des traits 17A et 17B sur les figures 4 et 6 qui sont à comparer au trait 12 de la figure 2. Les tourbillons 16 permettent un transfert d'énergie de l'écoulement principal E vers les couches limites. Les couches limites sont alors accélérées. Comme les faibles vitesses au pied des aubes 1, côté extrados 1B, sont responsables du tourbillon de coin, ledit tourbillon de coin est ainsi réduit.

Les dispositifs 14A, 14B générateurs de tourbillons 16 agissent donc simultanément sur l'écoulement principal E et sur l'écoulement de recirculation G, et ainsi simultanément sur les deux sources de pertes précitées, de manière à réduire efficacement les pertes.

Dans un premier mode de réalisation représenté sur les figures 3 et 4, lesdits dispositifs individuels 14A représentent des échancrures qui sont pratiquées directement dans la face amont 10 de la virole interne 5 et qui ont pour fonction exclusive de générer des tourbillons 16.

Par ailleurs, dans un second mode de réalisation préféré, représenté sur les figures 5 et 6, lesdits dispositifs individuels 14B représentent des ailettes qui sont agencées au niveau de la face amont 10 de la virole interne 5, à proximité dudit côté 15 radialement externe.

Ces ailettes 14B ont une double fonction. D'une part, elles génèrent des tourbillons 16 qui réduisent le tourbillon de coin, comme les dispositifs 14A du premier mode de réalisation. D'autre part, elles guident l'écoulement à la sortie de la cavité 8, qui se mélange à l'écoulement principal de manière plus homogène, en créant moins de décollements.

Quel que soit le mode de réalisation, la réduction des décollements, obtenue grâce à l'invention, permet d'améliorer le rendement du compresseur 3 et contribue à accroître la plage de stabilité.

En outre, un seul type de dispositif 14A, 14B permet de contrôler l'écoulement dans les cavités sous redresseur et diminuer les décollements associés. De plus, ces dispositifs 14A, 14B sont fixés ou fabriqués directement dans la plate-forme (virole interne 5) du redresseur 2, ce qui limite les difficultés d'intégration ou de fabrication.

Dans le cadre de la présente invention, lesdits dispositifs 14A, 14B peuvent être agencés :
- soit, entre deux aubes 1 successives, comme représenté sur les figures 3 et 5. Dans ce cas, une position préférentielle peut être située à un tiers du canal inter-aubes, côté extrados vue de l'amont ;
- soit, à chaque fois directement devant une aube 1.

De plus, lesdits dispositifs 14A, 14B peuvent être prévus sur la totalité ou seulement sur une partie de la circonférence du redresseur 2.

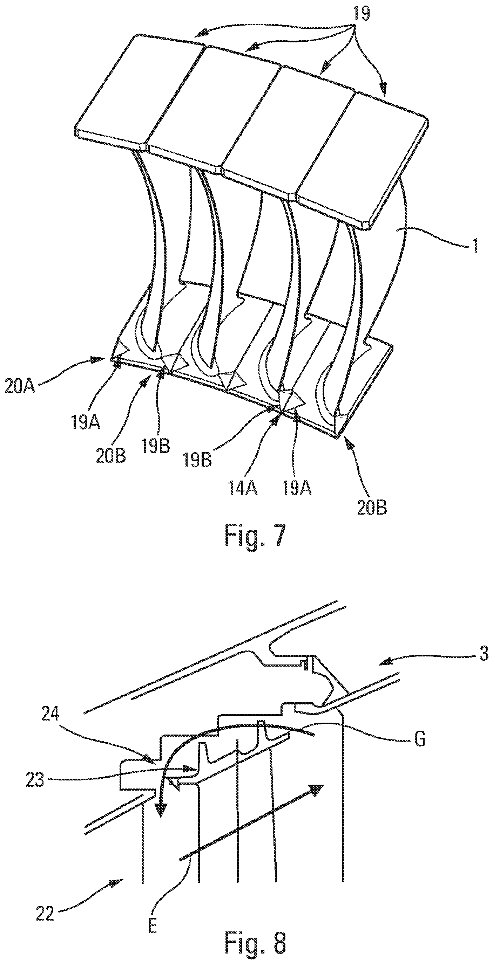

Dans un exemple ne faisant pas partie de l'invention représenté schématiquement sur la figure 7, un redresseur 2 est formé d'une pluralité de structures individuelles 19 comprenant chacune une aube 1. Ces structures 19 sont assemblées les unes à côté des autres de manière à former le redresseur 2. Dans une variante de réalisation particulière, chacune desdites structures 19 est pourvue d'un biseau 19A et 19B au niveau de chacun de ses bords 20A et 20B. Ainsi, les biseaux 19A et 19B de deux structures 19 adjacentes forment à chaque fois une échancrure 14A qui est susceptible de générer des tourbillons. Par ailleurs, la présente invention peut également être appliquée à un rotor 22 d'un compresseur 3 de turbomachine, comme représenté schématiquement sur la figure 8.

On sait que la roue mobile d'un tel rotor 22 peut avoir en tête, comme un stator (ou redresseur 2) en pied, une virole 23 et une cavité 24 dans laquelle peut circuler un écoulement de recirculation G.

L'invention peut être étendue à ce cas, en prévoyant des dispositifs générateurs de vortex (représentés schématiquement par des triangles sur la figure 8) au bord d'attaque de la virole 23 de la même manière que sur la virole interne 5 du redresseur 2. Les caractéristiques présentées ci-dessus pour le redresseur 2 (et notamment les caractéristiques des dispositifs générateurs de vortex 14A, 14B) peuvent être mises en oeuvre de façon similaire sur le rotor 22.

L'objectif dans ce mode de réalisation est le même que pour le redresseur 2, à savoir réduire les pertes dues à la recirculation et celles induites par le décollement de coin.

## Revendications

1. Ensemble (2, 22) à aubes (1) pour un compresseur (3) de turbomachine, ledit ensemble (2, 22) à aubes (1) comprenant une virole (5, 23) de support desdites aubes (1) qui, quand l'ensemble est monté dans le compresseur et quand le compresseur fonctionne, est contournée par un écoulement de recirculation (G) circulant dans une cavité (8, 24) autour de ladite virole, et une pluralité de dispositifs individuels (14A, 14B) qui agissent sur un écoulement principal (E) traversant les aubes, qui sont prévus en amont desdites aubes (1), et qui sont formés de manière à au moins générer des tourbillons (16),
**caractérisé en ce que** chacun desdits dispositifs individuels (14A, 14B) est agencé en amont des aubes (1) sur une face amont (10) de la virole (5, 23), chacun desdits dispositifs individuels (14A, 14B) étant agencé là où, quand le compresseur fonctionne, l'écoulement de recirculation (G) est réinjecté dans l'écoulement principal (E) en amont dudit ensemble (2, 22) de sorte que lesdits dispositifs individuels (14A, 14B) agissent simultanément sur l'écoulement principal (E) et sur l'écoulement de recirculation (G).

2. Ensemble selon la revendication 1, dont au moins certains desdits dispositifs (14A) comportent des échancrures qui sont pratiquées dans ladite face amont (10) de la virole (5, 23).

3. Ensemble selon l'une des revendications 1 et 2, dont lesdits dispositifs (14B) sont formés de manière à également guider au moins ledit écoulement de recirculation (G).

4. Ensemble selon la revendication 3, dont au moins certains desdits dispositifs (14B) comportent des ailettes qui sont agencées au niveau de ladite face amont (10) de la virole (5, 23).

5. Ensemble selon l'une quelconque des revendications 1 à 4, dont au moins certains desdits dispositifs (14A, 14B) sont agencés entre deux aubes (1) successives.

6. Ensemble selon l'une quelconque des revendications 1 à 4, dont au moins certains desdits dispositifs sont agencés à chaque fois directement en amont d'une aube (1).

7. Ensemble selon l'une quelconque des revendications 1 à 6, ledit ensemble correspondant à un redresseur (2) pour un compresseur (3) de turbomachine, ledit redresseur (2) comportant une virole externe (4) et une virole interne (5) qui sont coaxiales, ainsi que des aubes (1) qui sont agencées côte à côte entre ces viroles externe et interne (4, 5) et qui sont raccordées à ces dernières par leurs extrémités, ledit redresseur (2) comportant également une pluralité de dispositifs individuels (14A, 14B) agissant sur l'écoulement qui sont prévus sur la virole interne (5), chacun desdits dispositifs (14A, 14B) étant prévu au niveau de la face amont (10) de la virole interne (5), à proximité du côté (15) radialement externe, de manière à agir simultanément sur l'écoulement principal (E) et sur l'écoulement de recirculation (G) qui correspond à l'écoulement du fluide passant sous le côté radialement interne (11) de la virole interne (5), en provenance de la face aval (9A).

8. Ensemble selon la revendication 7,
**caractérisé en ce que** ledit redresseur (2) est formé d'une pluralité de structures individuelles (19) assemblées ensemble, comprenant chacune une aube (1).

9. Ensemble selon l'une quelconque des revendications 1 à 6, ledit ensemble correspondant à un rotor (22) pour un compresseur (3) de turbomachine, ledit rotor (22) comportant une virole interne et une virole externe (23) qui sont coaxiales, ainsi que des aubes (1) qui sont agencées côte à côte entre ces viroles interne et externe et qui sont raccordées à ces dernières par leurs extrémités, ledit rotor (22) comportant également une pluralité de dispositifs individuels agissant sur l'écoulement qui sont prévus sur la virole externe (23), chacun desdits dispositifs étant prévu au niveau de la face amont de la virole externe (23) de manière à agir simultanément sur l'écoulement principal (E) et sur l'écoulement de recirculation (G) qui correspond à l'écoulement du fluide passant sur le côté radialement externe de la virole externe (23), en provenance de la face aval.

10. Compresseur de turbomachine,
**caractérisé en ce qu'**il comprend au moins un ensemble à aubes (2, 22) selon l'une quelconque des revendications 1 à 9.

11. Turbomachine, en particulier turboréacteur d'aéronef, **caractérisée en ce qu'**elle comporte au moins un compresseur (3) selon la revendication 10.

## Patentansprüche

1. Anordnung (2, 22) mit Schaufeln (1) für einen Turbomaschinenkompressor (3), wobei die Anordnung (2, 22) mit Schaufeln (1) eine Zwinge (5, 23) zum Tragen der Schaufeln (1), die, wenn die Anordnung in dem Kompressor eingebaut ist und wenn der Kompressor in Betrieb ist, von einer Rezirkulationsströmung (G) umströmt ist, der in einem Hohlraum (8, 24) um die Zwinge strömt, und mehrere einzelne Vorrichtungen (14A, 14B) aufweist, die auf eine Hauptströmung (E) einwirken, die die Schaufeln durchquert, die vorgelagert vor den Schaufeln (1) vorgesehen sind und die derart ausgebildet sind, um Wirbel (16) zu erzeugen, **dadurch gekennzeichnet, dass** jede dieser einzelnen Vorrichtungen (14A, 14B) vorgelagert vor den Schaufeln (1) auf einer vorgelagerten Fläche (10) der Zwinge (5, 23) angeordnet ist, wobei jede der einzelnen Vorrichtungen (14A, 14B) dort angeordnet ist, wo, wenn der Kompressor in Betrieb ist, die Rezirkulationsströmung (G) in die Hauptströmung (E) vorgelagert vor der Anordnung (2, 22) derart zugeführt wird, dass die einzelnen Vorrichtungen (14A, 14B) gleichzeitig auf die Hauptströmung (E) und auf die Rezirkulationsströmung (G) einwirken.

2. Anordnung nach Anspruch 1, wobei mindestens einige der Vorrichtungen (14A) Aussparungen aufweisen, die in der vorgelagerten Fläche (10) der Zwinge (5, 23) ausgebildet sind.

3. Anordnung nach einem der Ansprüche 1 und 2, wobei die Vorrichtungen (14B) derart gebildet sind, um ferner mindestens die Rezirkulationsströmung (G) zu führen.

4. Anordnung nach Anspruch 3, wobei mindestens einige der Vorrichtungen (14B) Flügel aufweisen, die auf Ebene der vorgelagerten Fläche (10) der Zwinge (5, 23) angeordnet sind.

5. Anordnung nach einem der Ansprüche 1 bis 4, wobei mindestens einige der Vorrichtungen (14A, 14B) zwischen zwei aufeinanderfolgenden Schaufeln (1) angeordnet sind.

6. Anordnung nach einem der Ansprüche 1 bis 4, wobei mindestens einige der Vorrichtungen jeweils direkt vorgelagert von einer Schaufel (1) angeordnet sind.

7. Anordnung nach einem der Ansprüche 1 bis 6, wobei die Anordnung einem Gleichrichter (2) für einen Turbomaschinenkompressor (3) entspricht, wobei der Gleichrichter (2) eine äußere Zwinge (4) und eine innere Zwinge (5), die koaxial sind, und Schaufeln (1) aufweist, die nebeneinander zwischen dieser äußeren und inneren Zwinge (4, 5) angeordnet sind und die mit diesen Letzteren durch ihre Enden verbunden sind, wobei der Gleichrichter (2) auch mehrere einzelne Vorrichtungen (14A, 14B) aufweist, die auf die Strömung einwirken, die an der inneren Zwinge (5) vorgesehen sind, wobei jede der Vorrichtungen (14A, 14B) auf Ebene der vorgelagerten Fläche (10) der inneren Zwinge (5) in der Nähe der radial äußeren Seite (15) derart vorgesehen ist, um gleichzeitig auf die Hauptströmung (E) und auf die Rezirkulationsströmung (G) einzuwirken, die der Strömung des Fluids entspricht, das unter der radial inneren Seite (11) der inneren Zwinge (5) von der nachgelagerten Fläche (9A) kommend vorbeiströmt.

8. Anordnung nach Anspruch 7, **dadurch gekennzeichnet, dass** der Gleichrichter (2) aus mehreren einzelnen Strukturen (19) gebildet ist, die zusammengefügt sind, die jeweils eine Schaufel (1) aufweisen.

9. Anordnung nach einem der Ansprüche 1 bis 6, wobei die Anordnung einem Rotor (22) für einen Turbomaschinenkompressor (3) entspricht, wobei der Rotor (22) eine innere Zwinge und eine äußere Zwinge (23), die koaxial sind, und Schaufeln (1) aufweist, die nebeneinander zwischen dieser äußeren und inneren Zwinge angeordnet sind und die mit diesen Letzteren durch ihre Enden verbunden sind, wobei der Rotor (22) auch mehrere einzelne Vorrichtungen aufweist, die auf die Strömung einwirken, die an der äußeren Zwinge (23) vorgesehen sind, wobei jede der Vorrichtungen auf Ebene der vorgelagerten Fläche der äußeren Zwinge (23) derart vorgesehen ist, um gleichzeitig auf die Hauptströmung (E) und auf die Rezirkulationsströmung (G) einzuwirken, die der Strömung des Fluids entspricht, das auf der radial äußeren Seite der äußeren Zwinge (23) von der nachgelagerten Fläche kommend vorbeiströmt.

10. Turbomaschinenkompressor, **dadurch gekennzeichnet, dass** er mindestens eine Anordnung mit Schaufeln (2, 22) nach einem der Ansprüche 1 bis 9 aufweist.

11. Turbomaschine, insbesondere Turbostrahltriebwerk für ein Luftfahrzeug, **dadurch gekennzeichnet, dass** sie mindestens einen Kompressor (3) nach Anspruch 10 aufweist.

## Claims

1. An assembly (2, 22) with blades (1) for a turbomachine compressor (3), said assembly (2, 22) with vanes (1) comprising a support shell ring (5, 23) of said blades (1) which, when the assembly is mounted in the compressor and when the compressor operates, is bypassed by a recirculation flow (G) flowing in a cavity (8, 24) around said shell ring, and a plurality of individual devices (14A, 14B) which act on a main flow (E) crossing the blades, which are provided upstream of said blades (1), and which are formed so as to at least generate vortexes (16),
**characterised in that** each of said individual devices (14A, 14B) is arranged upstream of the blades (1) on an upstream face (10) of the shell ring (5, 23),
each of said individual devices (14A, 14B) being arranged where, when the compressor operates,
the recirculation flow (G) is reinjected into the main flow (E) upstream of said assembly (2, 22) such that said individual devices (14A, 14B) act simultaneously on the main flow (E) and on the recirculation flow (G).

2. An assembly according to claim 1, of which at least certain of said devices (14A) comprise indentations which are formed in said upstream face (10) of the shell ring (5, 23).

3. An assembly according to any one of claims 1 to 2, of which said devices (14B) are formed so as also to guide at least said recirculation flow (G).

4. An assembly according to claim 3, of which at least certain of said devices (14B) comprise vanes which are arranged at said upstream face (10) of the shell ring (5, 23).

5. An assembly according to any one of claims 1 to 4, of which at least certain of said devices (14A, 14B) are arranged between two successive blades (1).

6. An assembly according to any one of claims 1 to 4, of which at least certain of said devices are arranged every time directly upstream of a blade (1).

7. An assembly according to any one of claims 1 to 6, said assembly corresponding to a rectifier (2) for a turbomachine compressor (3), said rectifier (2) comprising one outer shell ring (4) and one inner shell ring (5) which are coaxial, and blades (1) which are arranged side by side between these outer and inner shell rings (4, 5) and which are connected to these latter by their ends, said rectifier (2) also comprising a plurality of individual devices (14A, 14B) acting on the flow which are provided on the inner shell ring (5), each of said devices (14A, 14B) being provided at the upstream face (10) of the inner shell ring (5), near the side (15) radially outside, so as to act simultaneously on the main flow (E) and on the recirculation flow (G) which corresponds to the flow of the fluid passing under the side radially inside (11) of the inner shell ring (5), coming from the downstream face (9A).

8. An assembly according to claim 7,
**characterised in that** said rectifier (2) is formed from a plurality of individual structures (19) assembled together, each comprising one blade (1).

9. An assembly according to any one of claims 1 to 6, said assembly corresponding to a rotor (22) for a turbomachine compressor (3), said rotor (22) comprising one inner shell ring and one outer shell ring (23) which are coaxial, and blades (1) which are arranged side by side between these inner and outer shell rings and which are connected to these latter by their ends, said rotor (22) also comprising a plurality of individual devices acting on the flow which are provided on the outer shell ring (23), each of said devices being provided at the upstream face of the outer shell ring (23) so as to act simultaneously on the main flow (E) and on the recirculation flow (G) which corresponds to the flow of the fluid passing on the side radially outside of the outer shell ring (23), coming from the downstream face.

10. A turbomachine compressor,
**characterised in that** it comprises at least one assembly with blades (2, 22) according to any one of claims 1 to 9.

11. A turbomachine, in particular aircraft turbojet engine,
**characterised in that** it comprises at least one compressor (3) according to claim 10.
